# EUROPEAN PATENT SPECIFICATION

(11) **EP 3 287 625 B1**
(45) Date of publication and mention of the grant of the patent: **09.10.2019**
(21) Application number: 17184600.9
(22) Date of filing: 03.08.2017
(51) Int. Cl.: F02C 9/52, F02C 9/54

(54) **GAS TURBINE ENGINE COMPRESSOR SURGE AVOIDANCE CONTROL SYSTEM AND METHOD**
STEUERUNGSSYSTEM UND -VERFAHREN ZUR VERMEIDUNG VON VERDICHTERPUMPEM EINES GASTURBINENMOTORS
SYSTÈME ET PROCÉDÉ DE COMMANDE D'ÉVITEMENT DE POMPAGE DE COMPRESSEUR DE MOTEUR DE TURBINE À GAZ

(30) Priority: 23.08.2016 US 201615244367
(43) Date of publication of application: 28.02.2018
(73) Proprietor: Honeywell International Inc., Morris Plains, NJ 07950 (US)
(72) Inventor: MOECKLY, Kevin, Morris Plains, NJ New Jersey 07950 (US); LING, Richard, Morris Plains, NJ New Jersey 07950 (US); MORRIS, David, Morris Plains, NJ New Jersey 07950 (US)
(74) Representative: Houghton, Mark Phillip

(56) References cited:
- WO-A2-02/40844
- US-A- 3 971 208
- US-A- 4 344 141
- US-A- 5 205 116

## Description

### TECHNICAL FIELD

The present invention generally relates to gas turbine engines, and more particularly relates to systems and methods for avoiding compressor surge in gas turbine engines.

### BACKGROUND

A gas turbine engine may be used to supply power to various types of vehicles and systems. For example, gas turbine engines may be used to supply propulsion power to an aircraft. Some gas turbine engines may also serve as auxiliary power units (APUs) to supplement main propulsion engines in providing electrical and/or pneumatic power, and/or to start the propulsion engines.

Regardless of its end-use, and as is generally known, gas turbine engines are designed so that the compressor operates with sufficient surge margin. If the surge margin is inadequate, a compressor surge can occur resulting, for example, in a stall or a compressor surge, in which an undesirable reversal of flow occurs. Most gas turbine engines control the positions of variable inlet and/or exit geometries or bleed valves to avoid compressor surge. Unfortunately, most gas turbine engines do not include systems to detect an impending surge or even if a compressor surge has occurred. Moreover, gas turbine engines do not include systems that can modify the areas of operation to be avoided in the event that the surge margin is reduced. US3971208 discloses a fuel control system for a gas turbine engine providing single lever thrust control and a closed loop fuel flow surge valve positioning system.

Hence, there is a need for a system and method for avoiding gas turbine compressor surge and/or modify areas of operation to be avoided in the event that the engine surge margin is reduced. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a compressor surge avoidance control method, according to the steps of claim 1, for a gas turbine engine includes sensing a plurality of engine inlet parameters, and receiving, in a processor, a fuel command value. The sensed parameters are processed in the processor to determine a surge fuel value that is representative of a fuel flow above which, for the sensed engine inlet parameters, a compressor surge will likely occur. The surge fuel value and the fuel command value are compared, in the processor, and a protective action signal is generated if the fuel command value exceeds the surge fuel value.

In another embodiment, a gas turbine engine control system, according to the features of claim 8, includes a plurality of engine inlet sensors and a processor. Each sensor is configured to sense an engine inlet parameter and supply an engine inlet parameter signal representative of the sensed engine inlet parameter. The processor is coupled to receive the engine inlet parameter signals and a fuel command value. The processor is configured, upon receipt of the engine inlet parameter signals and the fuel command, to: (i) determine a surge fuel value, the surge fuel value representative of a fuel flow above which, for the sensed engine inlet parameters, a compressor surge will likely occur, (ii) compare the surge fuel value and the fuel command, and (iii) generate a protective action signal if the fuel command value exceeds the surge fuel value.

In yet another embodiment, a compressor surge avoidance control system for a gas turbine engine includes an engine inlet air temperature sensor, an engine inlet air pressure sensor, and a processor. The engine inlet air temperature sensor is configured to sense engine inlet air temperature and supply an engine inlet air temperature signal representative thereof. The engine inlet air pressure sensor is configured to sense engine inlet air pressure and supply an engine inlet air pressure signal representative thereof. The processor is coupled to receive the engine inlet air temperature signal, the engine inlet air pressure signal, and a fuel command value, and is configured to: (i) determine a surge fuel value, the surge fuel value representative of a fuel flow above which, for the sensed engine inlet parameters, a compressor surge will likely occur, (ii) compare the surge fuel value and the fuel command, and (iii) generate one or both of an operator alert signal and a load adjustment signal that causes a load reduction on the gas turbine engine.

Furthermore, other desirable features and characteristics of the gas turbine engine compressor surge avoidance system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of an exemplary gas turbine engine control system;
FIG. 2 depicts one embodiment of a compressor surge avoidance logic that may be used to avoid a compressor surge in a gas turbine engine, such as the one depicted in FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

In view of the foregoing, although one embodiment described herein is directed toward a single-spool gas turbine engine for use in an aircraft, it will be appreciated that the described embodiments could be implemented in other types of gas turbine engines, including any one of numerous single-spool gas turbine engines and any one of numerous multi-spool gas turbine engines, and may also be used in various other vehicles and end-use environments.

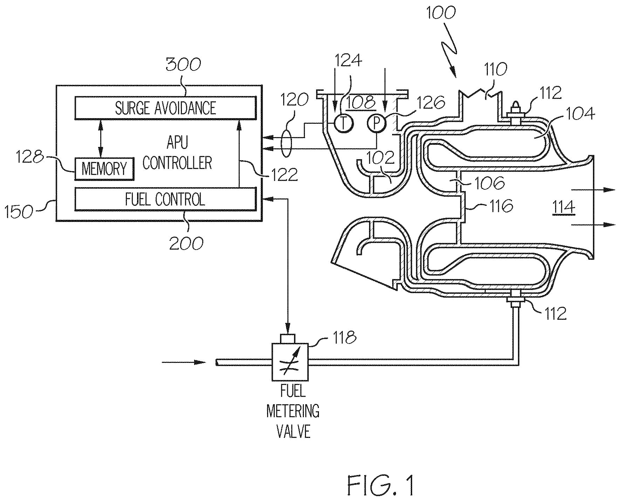

Turning now to FIG. 1, a simplified cross section view of an exemplary embodiment of an auxiliary power unit (APU) is shown. The APU 100 includes a compressor 102, a combustor 104, and a turbine 106. Air is directed into the compressor 102 via an air inlet 108. The compressor 102 raises the pressure of the air and supplies compressed air to both the combustor 104 and, in the depicted embodiment, to a bleed air outlet port 110. In the combustor 104, the compressed air is mixed with fuel that is supplied to the combustor 104 from a non-illustrated fuel source via a plurality of fuel nozzles 112. The fuel/air mixture is combusted, generating high-energy gas, which is then directed into the turbine 106.

The high-energy gas expands through the turbine 106, where it gives up much of its energy and causes the turbine 106 to rotate. The gas is then exhausted from the APU 100 via an exhaust gas outlet 114. As the turbine 106 rotates, it drives, via a turbine shaft 116, various types of equipment that may be mounted in, or coupled to, the APU 100. For example, in the depicted embodiment the turbine 106 drives the compressor 102. It will be appreciated that the turbine 106 may also be used to drive a generator and/or a load compressor and/or other rotational equipment, which are not shown in FIG. 1 for ease of illustration.

The APU 100 is controlled via an electronic control unit 150, which is referred to herein as an APU controller. The APU controller 150, which may be implemented using one or more processors, implements various logic to control the operation of the APU 100. In particular, the APU controller 150, at least in the depicted embodiment, implements fuel control logic 200 and surge avoidance logic 300. In the depicted embodiment, the fuel control logic 200 controls fuel flow to the combustor fuel nozzles 112 by controlling the position of a fuel metering valve 118. It will be appreciated that the use of a single fuel metering valve 118 is merely exemplary of the depicted embodiment, and that the fuel control logic 200 could instead, or additionally, control fuel flow by controlling one or more additional valves or pumps. It will additionally be appreciated that the fuel control logic 200 may be implemented according to any one of numerous fuel control logic schemes, now known or developed in the future. A detailed description of the fuel control logic is not needed to enable or fully describe the instant invention, and will thus not be further described.

The surge avoidance logic 300 receives a plurality of engine inlet parameters 120 and a fuel command value 122. The engine inlet parameters 120 that are supplied to the surge avoidance logic 300 are each representative of a sensed APU operational parameter, and the fuel command value 122 is representative of the fuel flow being supplied to the combustor fuel nozzles 112, as commanded by the fuel control logic 200. It will be appreciated that the particular APU operational parameters that are used in the surge avoidance logic 300 may vary. In the depicted embodiment, however, the APU operational parameters include at least engine inlet air temperature and engine inlet air pressure. In other embodiments, the APU operational parameters may include additional parameters, if needed or desired.

The specific sources of each of the engine inlet parameters may vary. For example, one or more of the engine inlet parameters may be supplied to the surge avoidance logic 300 directly via sensors or indirectly via other aircraft systems or devices. In the depicted embodiment, however, the engine inlet parameters are supplied to the surge avoidance logic 300 directly via sensors. Thus, as FIG. 1 additionally depicts, the APU 100 further includes at least an inlet air temperature sensor 124 and an inlet air pressure sensor 126. The inlet temperature sensor 124 is configured to sense the temperature of the air at the compressor inlet 108, and the inlet air pressure sensor 126 is configured to sense the pressure of the air at the compressor inlet 108.

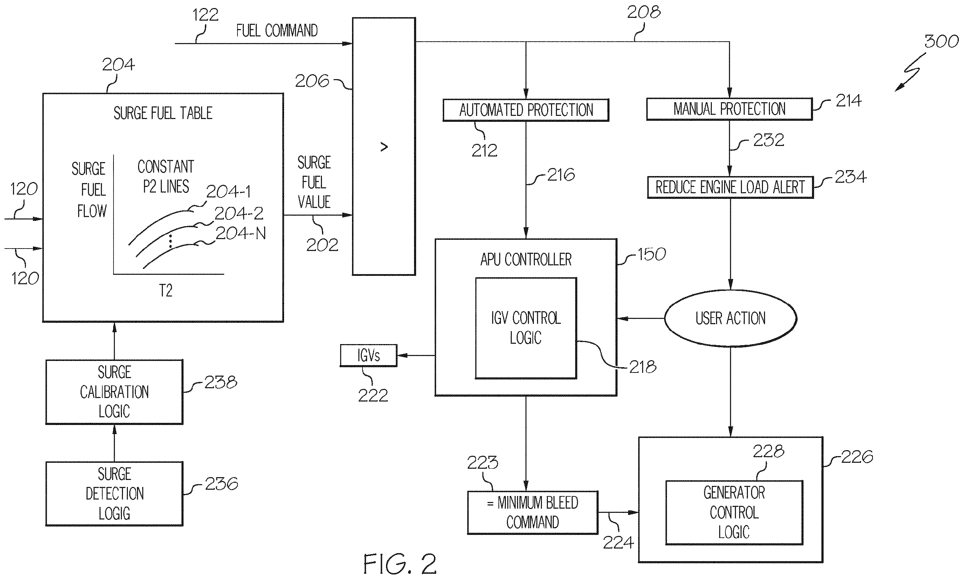

No matter the specific number and sources of engine inlet parameters, the surge avoidance logic 300 is configured, upon receipt of the engine inlet parameters 120 and the fuel command value 122, to determine if the engine compressor surge margin has, or is about to be, undesirably reduced and, if so, generates a protective action signal. The protective action signal may be an operator alert signal, a load adjustment signal that causes a load reduction on the gas turbine engine, or both. The particular logic implemented by the surge avoidance logic 300 to determine if the engine compressor surge margin has, or is about to be, undesirably reduced, and the types of protective action signals it generates may vary. One particular embodiment of the logic is depicted in FIG. 2, and with reference thereto will now be described.

The depicted surge avoidance logic 300 uses the engine inlet parameters 120 to determine a surge fuel value 202. As used herein, the surge fuel value is a value that is representative of a fuel flow above which, for the sensed engine inlet parameters 120, a compressor surge will likely occur. Although various techniques may be used to determine the surge fuel value 202, in the depicted embodiment the surge avoidance logic 300 uses a look-up table 204. The look-up table 204, which may be stored, for example, in a memory 128 (see FIG. 1), includes a plurality of surge fuel values that correspond to the engine 100 running at the minimum compressor surge margin. Fuel flow is an effective method to estimate engine compressor loading as a function of inlet temperature and pressure and the position of the current operating point on the compressor map. Thus, as FIG. 2 depicts, the stored surge fuel values represent a family of compressor maps 204-1, 204-1, ... 204-N (e.g., curves of surge fuel flow vs. engine inlet air temperature (i.e., T2) for a plurality of engine inlet air pressures (i.e., P2)).

Upon determining the surge fuel value 202, the surge avoidance logic 300, via a comparator function 206, compares the surge fuel value 202 and the fuel command value 122. If the fuel command value 122 is less than the surge fuel value 202, then no action is taken. If, however, the fuel command value 122 exceeds the surge fuel value 202, which can occur either through increased engine loading or changes in environmental conditions, then a protective action signal 208 is generated, indicating that engine load should be reduced to avoid a surge.

It will be appreciated that engine load reduction may be variously implemented. For example, if the engine 100 is supplying both bleed air and electrical power, bleed air load can be reduced by closing variable geometry devices, such as inlet guide vanes, and/or electrical load can be reduced via electrical load shedding. Regardless of the specific manner in which engine load reduction is achieved, as FIG. 2 depicts, the protective action signal 208 may result in automated protection 212 or manual protection 214 or both.

If the protective action signal 208 results in automated protection 212, a load adjustment signal 216 is generated that causes the load reduction on the gas turbine engine 100. In the depicted embodiment, the load adjustment signal 216 adjusts the inlet guide vane position commands that are supplied from, for example, inlet guide vane control logic 218 in the APU controller 150 to a plurality of inlet guide vanes 222. As load reduction is achieved through inlet guide vane position adjustment, the speed governor of the APU controller 150 will automatically reduce the fuel command 122 in order to maintain a constant speed. If the fuel command value 122 still exceeds the surge fuel value 202, and the inlet guide vane position command is at the minimum bleed command 223, then electrical load on the engine is reduced by supplying a generator load reduction command 224. The generator load reduction command 224 may be supplied to, for example, a vehicle control 226 that implements generator control logic 228 to implement automatic generator load shedding.

If the protective action signal 208 also, or instead, results in manual protection 214, then an operator alert signal 232 is generated. The operator alert signal 232 may result in an alert 234, audible, visual, or both, to an operator, indicating that the operator should manually reduce engine load or that engine load is being reduced automatically. In the event the alert 234 indicates that the operator should manually reduce engine load, then the operator can manually command the inlet guide vanes 222 and/or the generator control logic 228 as needed or desired to reduce engine load. If, on the other hand, the alert 234 indicates that engine load is being reduced automatically, the operator may, if needed or desired, override the load adjustment signal 216.

During the operational lifetime of a gas turbine engine 100, deterioration or other changes to the engine characteristics may result in a decrease in surge margin. Thus, the surge avoidance logic 300 is additionally configured to detect when a compressor surge occurs in the gas turbine engine 100 and, in response, update the look-up table 204 so that the protective action signal 208 will be triggered at a lower fuel command 122 in order to avoid a similar surge from reoccurring. In the depicted embodiment, the surge avoidance logic 300 detects a compressor surge via surge detection logic 236. The surge detection logic 236 may detect a compressor surge from one or more operational characteristics. Some example characteristics include, but are not limited to, cycling speeds, high operating temperatures, and fluctuating fuel demand.

Regardless of how the surge detection logic 236 specifically detects a compressor surge, upon detecting a surge, surge calibration logic 238 stores the fuel flow, the engine inlet air temperature (T2), and the engine inlet air pressure (P2) when the surge occurred, and modifies the values in the look-up table 204 accordingly to lower the fuel flow values to new levels. The modification of values in the look-up table 204 may occur across all table values or only a portion of table values in the vicinity of the detected surge.

The system and method described herein provides a technique for avoiding gas turbine compressor surge and/or modifying areas of operation to be avoided in the event that the engine surge margin is reduced.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A compressor surge avoidance control method for a gas turbine engine, comprising the steps of:
sensing a plurality of engine inlet parameters (120);
receiving, in a processor (200), a fuel command value (122);
processing the sensed engine inlet parameters in the processor (200) to determine a surge fuel value (202), the surge fuel value representative of a fuel flow above which, for the sensed engine inlet parameters (120), a compressor surge will likely occur;
comparing, in the processor (200), the surge fuel value and the fuel command value (122); and
generating, in the processor (200), a protective action signal if the fuel command value (122) exceeds the surge fuel value.

2. The method of claim 1, wherein the step of generating the protective action signal comprises one or both of:
generating an operator alert (232); and
generating a load adjustment signal (216) that causes a load reduction on the gas turbine engine.

3. The method of claim 2, further comprising adjusting inlet guide vane positions to cause the load reduction on the gas turbine engine.

4. The method of claim 3, further comprising:
reducing electrical load on the gas turbine engine when the inlet guide vane position commands have reached a minimum bleed command.

5. The method of claim 1, wherein:
the step of processing the sensed parameters comprises selecting the surge fuel value from a look-up table (126), and
the method further comprises detecting when a compressor surge occurs in the gas turbine engine and, in response, updating the look-up table so that the protective action signal is generated at a lower fuel command in order to avoid compressor surge recurrence.

6. The method of claim 5, wherein detecting when a compressor surge occurs comprises sensing one or more of cycling compressor speeds, fluctuating fuel demand, and relatively high operating temperatures.

7. The method of claim 1, wherein the inlet parameters comprise engine inlet air temperature (124) and engine inlet air pressure (126).

8. A gas turbine engine (100) comprising:
an engine inlet (108), a compressor (102), a combustor (104), a turbine (106), a plurality of fuel nozzles (112), and a gas turbine engine control system;
the gas turbine engine control system comprising:
a plurality of engine inlet sensors (124, 126), each sensor configured to sense an engine inlet parameter and supply an engine inlet parameter signal (120) representative of the sensed engine inlet parameter; and
a processor (300) coupled to receive the engine inlet parameter signals and a fuel command value (122), the fuel command value representative of fuel flow being supplied to the fuel nozzles, the processor configured, upon receipt of the engine inlet parameter signals and the fuel command value, to:
(i) process the engine inlet parameter signals to determine a surge fuel value, the surge fuel value representative of a fuel flow above which, for the sensed engine inlet parameters, a compressor surge will likely occur,
(ii) compare the surge fuel value and the fuel command value, and
(iii) generate a protective action signal if the fuel command value exceeds the surge fuel value.

9. The system of claim 8, wherein the protective action signal comprises one or both of:
an operator alert signal (232); and
a load adjustment signal (216) that causes a load reduction on the gas turbine engine.

10. The system of claim 9, further comprising:
a plurality of inlet guide vanes (222), the inlet guide vanes responsive to inlet guide vane position commands to thereby vary load on the gas turbine engine,
wherein the load adjustment signal adjusts the inlet guide vane position commands to cause the load reduction on the gas turbine engine.

11. The system of claim 10, wherein the processor is further configured to determine when the inlet guide vane position commands have reached a minimum bleed command and, upon making this determination, supplying a command to reduce electrical load on the gas turbine engine.

12. The system of claim 8, further comprising:
a memory (128) in operable communication with the processor, the memory having stored therein a look-up table, the look-up table comprising a plurality of surge fuel values,
wherein the processor is configured to determine the surge fuel value from the look-up table.

13. The system of claim 12, wherein the processor is further configured to detect when a compressor surge occurs in the gas turbine engine and, in response, update the look-up table so that the protective action signal is generated at a lower fuel command in order to avoid compressor surge recurrence.

14. The system of claim 13, wherein the processor is configured to detect when a compressor surge occurs based on one or more of cycling compressor speeds, fluctuating fuel demand, and relatively high operating temperatures.

15. The system of claim 8, wherein the engine inlet sensors comprise:
an engine inlet air temperature sensor (124); and
an engine inlet air pressure sensor (126).

## Patentansprüche

1. Steuerverfahren zum Vermeiden von Verdichterpumpen für einen Gasturbinenmotor, das die folgenden Schritte umfasst:
Erfassen einer Vielzahl von Motoreinlassparametern (120) ;
Empfangen eines Brennstoffbefehlswertes (122) in einem Prozessor (200);
Verarbeiten der erfassten Motoreinlassparameter im Prozessor (200), um einen Pumpbrennstoffwert (202) zu bestimmen, wobei der Pumpbrennstoffwert für einen Brennstofffluss repräsentativ ist, über dem für die erfassten Motoreinlassparameter (120) wahrscheinlich ein Verdichterpumpen auftritt;
Vergleichen des Pumpbrennstoffwertes und des Brennstoffbefehlswertes (122) im Prozessor (200) und Erzeugen eines Schutzaktionssignals im Prozessor (200), wenn der Brennstoffbefehlswert (122) den Pumpbrennstoffwert überschreitet.

2. Verfahren nach Anspruch 1, wobei der Schritt des Erzeugens des Schutzaktionssignals eines oder beides von Folgendem umfasst:
Erzeugen eines Bedieneralarms (232) und
Erzeugen eines Lastanpassungssignals (216), das eine Lastreduzierung am Gasturbinenmotor bewirkt.

3. Verfahren nach Anspruch 2, das ferner das Anpassen von Einlassleitschaufelpositionen, um die Lastreduzierung am Gasturbinenmotor zu bewirken, umfasst.

4. Verfahren nach Anspruch 3, das ferner Folgendes umfasst:
Reduzieren einer elektrischen Last am Gasturbinenmotor, wenn die Einlassleitschaufelpositionsbefehle einen minimalen Entlüftungsbefehl erreicht haben.

5. Verfahren nach Anspruch 1, wobei:
der Schritt des Verarbeitens der erfassten Parameter das Auswählen des Pumpbrennstoffwertes aus einer Nachschlagetabelle (126) umfasst und
das Verfahren ferner das Detektieren, wenn ein Verdichterpumpen im Gasturbinenmotor auftritt, und in Reaktion das Aktualisieren der Nachschlagetabelle derart, dass das Schutzaktionssignal bei einem niedrigeren Brennstoffbefehl erzeugt wird, um ein erneutes Auftreten von Verdichterpumpen zu vermeiden, umfasst.

6. Verfahren nach Anspruch 5, wobei das Detektieren, wenn ein Verdichterpumpen auftritt, das Erfassen von einem oder mehreren von Verdichterzyklusgeschwindigkeiten, schwankendem Brennstoffbedarf und relativ hohen Betriebstemperaturen umfasst.

7. Verfahren nach Anspruch 1, wobei die Einlassparameter eine Motoreinlasslufttemperatur (124) und einen Motoreinlassluftdruck (126) umfassen.

8. Gasturbinenmotor (100), der Folgendes umfasst:
einen Motoreinlass (108), einen Verdichter (102), eine Brennkammer (104), eine Turbine (106), eine Vielzahl von Brennstoffdüsen (112) und ein Gasturbinenmotorsteuersystem;
wobei das Gasturbinenmotorsteuersystem Folgendes umfasst:
eine Vielzahl von Motoreinlasssensoren (124, 126), wobei jeder Sensor dazu ausgelegt ist, einen Motoreinlassparameter zu erfassen und ein Motoreinlassparametersignal (120), das für den erfassten Motoreinlassparameter repräsentativ ist, zu liefern; und
einen Prozessor (300), der gekoppelt ist, um die Motoreinlassparametersignale und einen Brennstoffbefehlswert (122) zu empfangen, wobei der Brennstoffbefehlswert dafür repräsentativ ist, dass ein Brennstofffluss an die Brennstoffdüsen geliefert wird, wobei der Prozessor nach Empfang der Motoreinlassparametersignale und des Brennstoffbefehlswertes zu Folgendem ausgelegt ist:
(i) Verarbeiten der Motoreinlassparametersignale, um einen Pumpbrennstoffwert zu bestimmen, wobei der Pumpbrennstoffwert für einen Brennstofffluss repräsentativ ist, über dem für die erfassten Motoreinlassparameter wahrscheinlich ein Verdichterpumpen auftritt,
(ii) Vergleichen des Pumpbrennstoffwertes und des Brennstoffbefehlswertes und
(iii) Erzeugen eines Schutzaktionssignals, wenn der Brennstoffbefehlswert den Pumpbrennstoffwert überschreitet.

9. System nach Anspruch 8, wobei das Schutzaktionssignal eines oder beides von Folgendem umfasst:
ein Bedieneralarmsignal (232) und
ein Lastanpassungssignal (216), das eine Lastreduzierung am Gasturbinenmotor bewirkt.

10. System nach Anspruch 9, das ferner Folgendes umfasst:
eine Vielzahl von Einlassleitschaufeln (222), wobei die Einlassleitschaufeln auf Einlassleitschaufelpositionsbefehle reagieren, um dadurch eine Last am Gasturbinenmotor zu variieren,
wobei das Lastanpassungssignal die Einlassleitschaufelpositionsbefehle anpasst, um die Lastreduzierung am Gasturbinenmotor zu bewirken.

11. System nach Anspruch 10, wobei der Prozessor ferner dazu ausgelegt ist, zu bestimmen, wann die Einlassleitschaufelpositionsbefehle einen minimalen Entlüftungsbefehl erreicht haben, und nach Vornehmen dieser Bestimmung einen Befehl zu liefern, um eine elektrische Last am Gasturbinenmotor zu reduzieren.

12. System nach Anspruch 8, das ferner Folgendes umfasst:
einen Speicher (128) in Wirkkommunikation mit dem Prozessor, wobei der Speicher darin eine Nachschlagetabelle gespeichert hat, wobei die Nachschlagetabelle eine Vielzahl von Pumpbrennstoffwerten umfasst,
wobei der Prozessor dazu ausgelegt ist, den Pumpbrennstoffwert aus der Nachschlagetabelle zu bestimmen.

13. System nach Anspruch 12, wobei der Prozessor ferner dazu ausgelegt ist, zu detektieren, wenn ein Verdichterpumpen im Gasturbinenmotor auftritt, und in Reaktion die Nachschlagetabelle derart zu aktualisieren, dass das Schutzaktionssignal bei einem niedrigeren Brennstoffbefehl erzeugt wird, um ein erneutes Auftreten von Verdichterpumpen zu vermeiden.

14. System nach Anspruch 13, wobei der Prozessor ferner dazu ausgelegt ist, auf Basis von einem oder mehreren von Verdichterzyklusgeschwindigkeiten, schwankendem Brennstoffbedarf und relativ hohen Betriebstemperaturen zu detektieren, wenn ein Verdichterpumpen auftritt.

15. System nach Anspruch 8, wobei die Motoreinlasssensoren Folgendes umfassen:
einen Motoreinlasslufttemperatursensor (124) und
einen Motoreinlassluftdrucksensor (126).

## Revendications

1. Procédé de commande pour empêcher le pompage d'un compresseur pour un moteur à turbine à gaz, comprenant les étapes consistant à :
détecter une pluralité de paramètres d'entrée du moteur (120) ;
recevoir, dans un processeur (200), une valeur de commande de carburant (122) ;
traiter les paramètres d'entrée du moteur détectés dans le processeur (200) afin de déterminer une valeur de carburant de pompage (202), cette valeur de carburant de pompage étant représentative d'un débit de carburant au-dessus duquel, pour les paramètres d'entrée du moteur détectés (120), un pompage du compresseur est susceptible de se produire ;
la comparaison, dans le processeur (200), de la valeur de carburant de pompage et de la valeur de commande de carburant (122) ; et
la génération, dans le processeur (200), d'un signal d'action de protection si la valeur de commande de carburant (122) dépasse la valeur de carburant de pompage.

2. Procédé selon la revendication 1, dans lequel l'étape de génération du signal d'action de protection comprend une des actions suivantes ou les deux :
la génération d'une alerte de l'opérateur (232) ; et
la génération d'un signal de réglage de charge (216) qui entraîne la réduction de la charge sur le moteur à turbine à gaz.

3. Procédé selon la revendication 2, comprenant en outre le réglage des positions des aubes directrices d'entrée pour entraîner la réduction de la charge sur le moteur à turbine à gaz.

4. Procédé selon la revendication 3, comprenant en outre :
la réduction de la charge électrique sur le moteur à turbine à gaz lorsque les commandes des positions des aubes directrices d'entrée ont atteint une commande de purge minimum.

5. Procédé selon la revendication 1, dans lequel :
l'étape de traitement des paramètres détectés comprend la sélection de la valeur de carburant de pompage dans une table à consulter (126), et
ce procédé comprenant en outre la détection de quand un pompage du compresseur se produit dans le moteur à turbine à gaz, et, en réponse, la mise à jour de la table à consulter de manière à ce que le signal d'action de protection soit généré à une commande de carburant plus basse afin d'empêcher le pompage du compresseur de se reproduire.

6. Procédé selon la revendication 5, dans lequel la détection de quand un pompage du compresseur se produit comprend la détection d'un ou de plusieurs des paramètres suivants : vitesses cycliques du compresseur, demande variable de carburant, et températures de fonctionnement relativement élevées.

7. Procédé selon la revendication 1, dans lequel les paramètres d'entrée comprennent la température de l'air d'entrée du moteur (124) et la pression de l'air d'entrée du moteur (126) .

8. Moteur à turbine à gaz (100), comprenant :
une entrée de moteur (108), un compresseur (102), une chambre de combustion (104), une turbine (106), une pluralité d'injecteurs de carburant (112), et un système de commande de moteur à turbine à gaz ;
le système de commande du moteur à turbine à gaz comprenant :
une pluralité de capteurs d'entrée du moteur (124, 126), chaque capteur étant configuré de façon à détecter un paramètre d'entrée du moteur et à fournir un signal de paramètre d'entrée du moteur (120) représentatif du paramètre d'entrée du moteur détecté ; et
un processeur (300) couplé de façon à recevoir les signaux des paramètres d'entrée du moteur et une valeur de commande de carburant (122), cette valeur de commande de carburant étant représentative du débit de carburant alimenté aux injecteurs de carburant, ce processeur étant configuré de façon à, lors de la réception des signaux des paramètres d'entrée du moteur et de la valeur de commande de carburant :
(i) traiter les paramètres d'entrée du moteur afin de déterminer une valeur de carburant de pompage, cette valeur de carburant de pompage étant représentative d'un débit de carburant au-dessus duquel, pour les paramètres d'entrée du moteur détectés, un pompage du compresseur est susceptible de se produire,
(ii) comparer la valeur de carburant de pompage et la valeur de commande de carburant, et à
(iii) générer un signal d'action de protection si la valeur de commande de carburant dépasse la valeur de carburant de pompage.

9. Système selon la revendication 8, dans lequel le signal d'action de protection consiste en un des signaux suivants ou les deux :
un signal d'alerte de l'opérateur (232) ; et
un signal de réglage de charge (216) qui entraîne la réduction de la charge sur le moteur à turbine à gaz.

10. Système selon la revendication 9, comprenant en outre :
une pluralité d'aubes directrices d'entrée (222), ces aubes directrices d'entrée étant réceptives aux commandes de positions des aubes directrices d'entrée pour varier ainsi la charge sur le moteur à turbine à gaz,
le signal de réglage de la charge réglant les commandes des positions des aubes directrices d'entrée pour entraîner la réduction de la charge sur le moteur à turbine à gaz.

11. Système selon la revendication 10, dans lequel le processeur est configuré en outre de façon à déterminer quand les commandes des positions des aubes directrices d'entrée ont atteint une commande de purge minimum et, lorsque cette détermination est faite, à fournir une commande pour réduire la charge électrique sur le moteur à turbine à gaz.

12. Système selon la revendication 8, comprenant en outre :
une mémoire (128) en communication opérationnelle avec le processeur, une table à consulter étant stockée dans cette mémoire, cette table à consulter comprenant une pluralité de valeurs de carburant de pompage,
le processeur étant configuré de façon à déterminer la valeur de carburant de pompage à partir de la table à consulter.

13. Système selon la revendication 12, le processeur étant configuré en outre de façon à détecter quand un pompage de compresseur se produit dans le moteur à turbine à gaz, et, en réponse, à mettre à jour de la table à consulter de manière à ce que le signal d'action de protection soit généré à une commande de carburant plus basse afin d'empêcher le pompage du compresseur de se reproduire.

14. Système selon la revendication 13, dans lequel le processeur est configuré de façon à détecter quand un pompage du compresseur se produit en se basant sur un ou plusieurs des paramètres suivants : vitesses cycliques du compresseur, demande variable de carburant, et températures de fonctionnement relativement élevées.

15. Système selon la revendication 8, dans lequel les capteurs d'entrée du moteur comprennent :
un capteur de température d'air d'entrée du moteur (124) ; et
un capteur de pression d'air d'entrée du moteur (126).
